# EUROPEAN PATENT APPLICATION

(11) **EP 4 550 537 A1**
(43) Date of publication of application: **07.05.2025**
(21) Application number: 23831234.2
(22) Date of filing: 21.06.2023
(51) Int. Cl.: H01M 50/184, H01M 50/105, H01M 50/186, H01M 50/191, H01M 50/193, H01M 50/195, H01M 50/197, H01M 50/198

(54) **PROTECTION FILM FOR ALL-SOLID-STATE BATTERY**

(30) Priority: 30.06.2022 JP 2022106201
(71) Applicant: Toppan Holdings Inc., Tokyo 110-0016 (JP)
(72) Inventor: SASAKI, Satoshi, Tokyo 110-0016 (JP); MURATA, Koji, Tokyo 110-0016 (JP)
(74) Representative: Hoffmann Eitle
(86) International application number: PCT/JP2023/022998
(87) International publication number: WO 2024/004788

(57) **Abstract**

The present invention relates to a protective film for solid-state batteries, which is a protective film arranged to cover a heat seal part of a solid-state battery including a battery element having a solid electrolyte, a packaging material housing the battery element, the heat seal part being disposed to a peripheral portion of the packaging material, and which contains a hydrogen sulfide adsorbent.

## Description

### [Technical Field]

The present invention relates to a protective film for solid-state batteries.

### [Background Art]

Secondary batteries such as lithium-ion batteries are widely used in portable electronic devices, electric vehicles and hybrid electric vehicles which use electricity as a power source, and others. As batteries having improved safety over lithium-ion batteries, solid-state lithium batteries including an inorganic solid electrolyte in place of an organic solvent electrolyte have been studied. Solid-state lithium batteries have better safety than lithium-ion batteries, in that thermal runaway resulting from a short circuit or the like is unlikely to occur.

Of inorganic solid-state electrolytes, a sulfide-based solid-state electrolyte is higher in ion conductivity than an oxide-based solid-state electrolyte or others and has multiple advantages in obtaining a solid-state battery having higher performance. For example, PTL 1 discloses a solid-state battery including a sulfide-based electrolyte powder which contains a sulfur element, a lithium element, and at least one element selected from the group consisting of boron, silicon, germanium, phosphorus, and aluminum and which has a mean particle diameter of 0.01 to 10 µm.

### [Citation List]

### [Patent Literature]

PTL 1: JP 2008-288098 A

### [Summary of the Invention]

### [Technical Problem]

In a solid-state battery using a sulfide-based solid-state electrolyte, hydrogen sulfide (H₂S) may be produced. Therefore, an object of the present invention is to provide a protective film for solid-state batteries which can suppress release of hydrogen sulfide into an external environment.

### [Solution to Problem]

The present invention relates to a protective film for solid-state batteries, which is a protective film arranged to cover a heat seal part of a solid-state battery including a battery element having a solid electrolyte, a packaging material housing the battery element, the heat seal part being disposed to a peripheral portion of the packaging material, and which contains a hydrogen sulfide adsorbent. According to such a protective film for solid-state batteries, release of hydrogen sulfide into an external environment can be suppressed.

The above-described protective film for solid-state batteries has a multilayer configuration containing a substrate film and an adhesive layer, and the hydrogen sulfide adsorbent may be contained in at least one of the substrate film and the adhesive layer. The above-described protective film for solid-state batteries may further include a gas barrier layer disposed on at least one surface of the substrate film. The gas barrier layer may contain at least one of alumina and silica. The above-described protective film for solid-state batteries preferably has a water vapor permeability of 10 g/m²·day or less.

The above-described protective film for solid-state batteries has a multilayer configuration containing a metal foil and an adhesive layer, and the hydrogen sulfide adsorbent may be contained in the adhesive layer.

The above-described hydrogen sulfide adsorbent may contain zinc oxide, may be zeolite containing zinc ions, may be a mixture containing zeolite, zinc oxide, and copper oxide, or may contain at least one of silver sulfate and silver acetate.

### [Advantageous Effects of the Invention]

According to the present invention, there can be provided a protective film for solid-state batteries capable of suppressing release of hydrogen sulfide into an external environment.

### [Brief Description of the Drawings]

Fig. 1 is a perspective view illustrating an example of a solid-state battery including a protective film for solid-state batteries according to the present embodiment.
Fig. 2 is a cross-sectional view taken along line II-II shown in Fig. 1.
Fig. 3 is a schematic cross-sectional view of a protective film for solid-state batteries according to an embodiment of the present invention.
Fig. 4 is a schematic cross-sectional view of a protective film for solid-state batteries according to an embodiment of the present invention.
Fig. 5 is a schematic cross-sectional view of a protective film for solid-state batteries according to an embodiment of the present invention.

### [Description of the Embodiments]

Hereinafter, embodiments of the present invention will be described in detail with reference to the drawings. In the drawings, the same or equivalent portions are denoted by the same reference signs, and duplicate description is omitted. Further, dimensional ratios in the drawings are not limited to the ratios shown in the drawings.

The protective film for solid-state batteries according to the present embodiment is a protective film arranged to cover a heat seal part of a solid-state battery including a battery element having a solid electrolyte, a packaging material housing the battery element, and the heat seal part disposed to an outer edge of the packaging material, and contains a hydrogen sulfide adsorbent. According to such a protective film, release of hydrogen sulfide into an external environment can be suppressed.

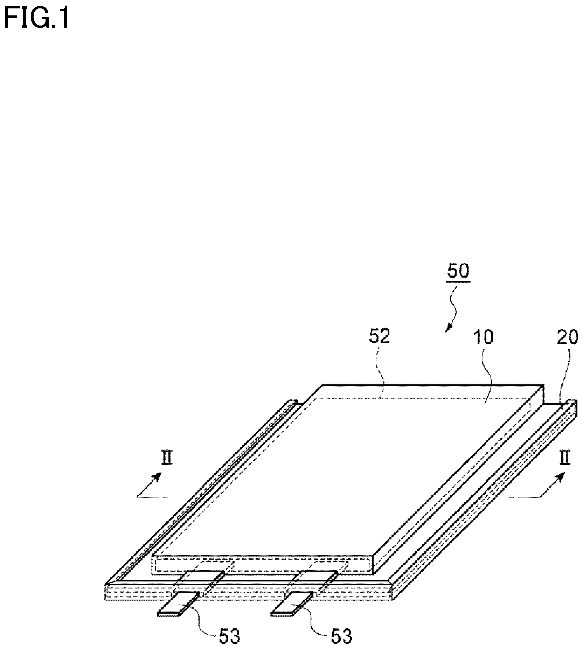

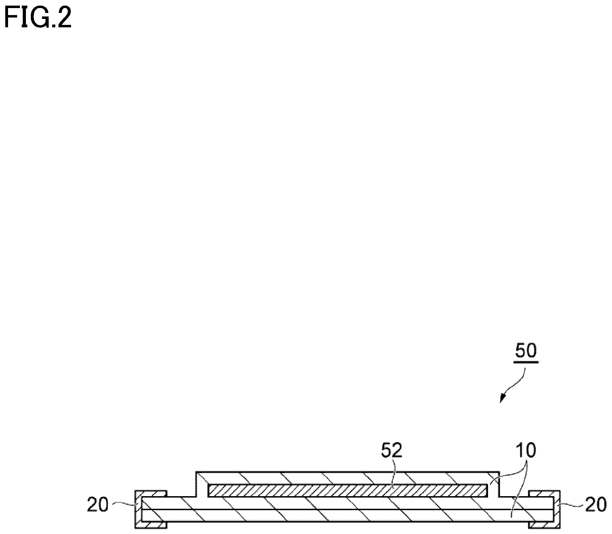

Fig. 1 is a perspective view illustrating an example of a solid-state battery including a protective film for solid-state batteries according to the present embodiment. Fig. 2 is a cross-sectional view taken along line II-II shown in Fig. 1. A solid-state battery 50 shown in these drawings includes a battery element 52 having a solid electrolyte, a packaging material 10 housing the battery element 52, two metal terminals (current output terminals) 53 for externally outputting a current from the battery element 52, and a protective film (protective film for solid-state batteries) 20. The packaging material 10 can be obtained by, for example, heat-sealing a laminate film including a substrate layer and a sealant layer. The packaging material 10 is obtained, for example, by folding one laminate film in two and thermally bonding the outer edge or stacking two laminate films and thermally bonding the outer edge, with the substrate layer on the outer side of the solid-state battery 50 and the sealant layer on the inner side of the solid-state battery 50, so that a heat seal part is disposed to the outer edge, and the battery element 52 is enclosed therein. The protective film 20 is arranged to cover the heat seal part disposed to the outer edge of the packaging material 10.

The battery element 52 includes positive and negative electrodes and a sulfide-based solid electrolyte disposed therebetween. The metal terminals 53 are each obtained by exposing a part of a current collector outside the packaging material 10, and are formed of metal foil such as copper foil or aluminum foil. The metal terminals 53 are sandwiched by and enclosed in the packaging material 10 which serves as a container. The metal terminals 53 may be sandwiched by the packaging material 10 via a tab sealant.

The protective film 20 contains a hydrogen sulfide adsorbent. A hydrogen sulfide adsorbent means one capable of adsorbing and/or decomposing hydrogen sulfide. Examples of the hydrogen sulfide adsorbent include zinc oxide, amorphous metal silicate (mainly those including copper or zinc as metal), hydrates of zirconium and lanthanoid elements, tetravalent metal phosphates (particularly those including copper as metal), zeolites containing zinc ions, mixtures containing zeolites, zinc oxide, and copper oxide (for example, copper oxide (II)), potassium permanganate, sodium permanganate, silver sulfate, silver acetate, aluminum oxide, iron hydroxide, aluminum silicate, aluminum potassium sulfate, zeolites, hydrotalcite, complex oxides (mainly those including zinc as metal) activated carbon, amine-based compounds, and ionomers. From the viewpoint of further easily detoxifying hydrogen sulfide as well as cost and handleability, the hydrogen sulfide adsorbent may contain zinc oxide (ZnO) and/or zinc ions. The hydrogen sulfide adsorbents may be used individually or in combination of two or more.

As the hydrogen sulfide adsorbent, a deodorant having the effect of deodorizing hydrogen sulfide may be used. Specific examples include "Daimushu PE-M 3000-Z" (a material including three components of ZnO, CaO, and aluminum potassium sulfate) manufactured by Dainichiseika Color & Chemicals Mfg. Co., Ltd., "Kesumon" series manufactured by Toagosei Co., Ltd., "Shu-Cleanse" (a mixture of zeolite and zinc oxide) manufactured by Rasa Industries, Ltd., and "Dushlite ZU" (a mixture of zeolite and zinc), "Dushlite CZU" (a mixture of zeolite, copper oxide, and zinc oxide), and "Dushlite ZH" (zeolite containing zinc ions) manufactured by Sinanen Zeomic Co., Ltd.

From the viewpoint of easily obtaining excellent hydrogen sulfide absorptivity, the hydrogen sulfide adsorbent is preferably one containing zinc oxide; zeolite containing zinc ions; a mixture containing zeolite, zinc oxide, and copper oxide; or one containing at least one of silver sulfate and silver acetate.

From the viewpoint of easily obtaining excellent hydrogen sulfide absorptivity, the hydrogen sulfide adsorbent may have a mean particle diameter (D50) of 0.01 µm or more, 0.05 µm or more, or 0.1 µm or more. The mean particle diameter (D50) of the hydrogen sulfide adsorbent may be 5 µm or less from the viewpoint of improving dispersibility, and may be 4 µm or less, 3 µm or less, or 2 µm or less from the viewpoint of increasing a specific surface area and improving hydrogen sulfide adsorptivity. The mean particle diameter of the hydrogen sulfide adsorbent means a mean particle diameter measured by a dynamic light scattering method.

The water vapor permeability of the protective film 20 is preferably 10 g/m²·day or less, more preferably 0.1 g/m²·day or less, and further preferably 0.01 g/m²·day or less. The water vapor permeability of the protective film 20 may be, for example, 0 g/m²·day and may be more than 0 g/m²·day.

In the present specification, water vapor permeability means water vapor permeability at 40°C and 90% RH measured in accordance with "JIS Z 0208:1976 Cup method". It is considered that hydrogen sulfide occurs when moisture entering the inside of the solid-state battery reacts with a sulfur component of the solid-state battery. That is, according to the protective film 20 having the above-described water vapor permeability, it is considered that occurrence itself of hydrogen sulfide is likely to be suppressed.

The thickness of the protective film 20 is not particularly limited, but may be, for example, in a range of 3 to 200 µm, may be in a range of 5 to 100 µm, or may be in a range of 20 to 80 µm.

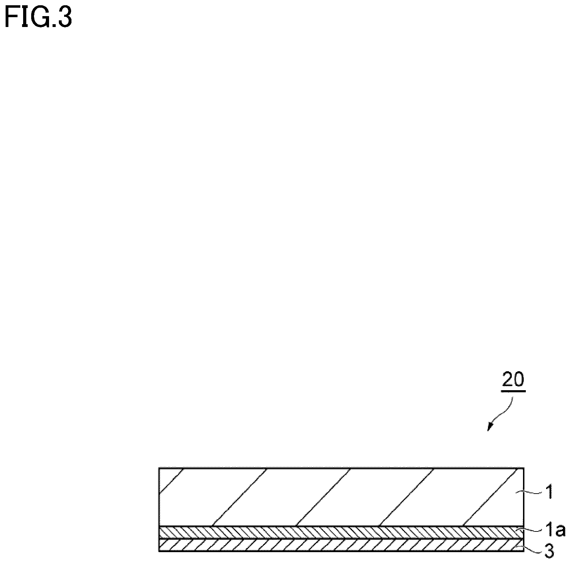

Hereinafter, specific examples of the protective film 20 will be further explained. Fig. 3 is a schematic cross-sectional view of a protective film for solid-state batteries according to an embodiment of the present invention. The protective film 20 shown in Fig. 3 includes a substrate film 1, a gas barrier layer 1a, and an adhesive layer 3 in this order.

The gas barrier layer 1a has water vapor barrier properties to prevent moisture from penetrating to the inside of the solid-state battery. The gas barrier layer 1a may be either present or absent, but water vapor barrier properties to prevent moisture from entering the inside of the solid-state battery can be imparted to the protective film when the gas barrier layer 1a is disposed on at least one surface of the substrate film 1.

The gas barrier layer 1a may be, for example, a vapor deposition layer such as a metal vapor deposition layer, an inorganic oxide vapor deposition layer, or a carbon-containing inorganic oxide vapor deposition layer. The gas barrier layer 1a preferably contains, for example, at least one of alumina and silica.

The substrate film 1 is preferably a film made of a resin having insulating properties. Usable examples of the resin include a polyester resin, a polyamide resin, a polyimide resin, a polyamideimide resin, a polyetherketone resin, a polyphenylene sulfide resin, a polyether imide resin, a polysulfone resin, a fluorine resin, a phenol resin, a melamine resin, a urethane resin, an allyl resin, a silicon resin, an epoxy resin, a furan resin, and an acetyl cellulose resin.

The substrate film 1 may be either a monolayer film or a multilayer film. **In** the case of multilayer film, it may be formed by combining different resins. When the substrate film 1 is a multilayer film, it may be obtained by co-extrusion or by lamination via an adhesive agent.

Among these resins, a polyester resin and a polyamide resin are preferable as the substrate film 1. Examples of the polyester resin include polyethylene terephthalate, polybutylene terephthalate, and polyethylene naphthalate. Examples of the polyamide resin constituting a polyamide film include Nylon-6, Nylon-6,6, a copolymer of Nylon-6 and Nylon-6,6, Nylon-6, Nylon-9T, Nylon-10, polymetaxylylene adipamide (MXD6), Nylon-11, and Nylon-12.

The substrate film 1 is preferably a biaxially stretched film. Examples of a stretching method used in the biaxially stretched film include sequential biaxial stretching, tubular biaxial stretching, and simultaneous biaxial stretching. From the viewpoint of obtaining more excellent deep drawing properties, the biaxially stretched film is preferably one stretched by tubular biaxial stretching.

When the adhesive layer 3 is the later-described sealant layer, the melting point peak temperature of the substrate film 1 is preferably higher than the melting point peak temperature of the sealant layer and more preferably higher by 30°C or more than the melting point peak temperature of the sealant layer, from the viewpoint of suppressing deformation of the substrate film 1 at the time of sealing.

The thickness of the substrate film 1 is preferably 1 to 40 µm, more preferably 2 to 30 µm, and further preferably 3 to 20 µm.

The adhesive layer 3 is a layer for bonding the protective film 20 to the packaging material 10. Examples of the adhesive layer 3 include an adhesive agent layer formed of an adhesive agent, a pressure-sensitive adhesive agent layer formed of a pressure-sensitive adhesive agent, and a sealant layer formed of a sealant material.

Examples of the adhesive agent include a polyurethane resin obtained by allowing an isocyanate compound having two or more functional groups (a multifunctional isocyanate compound) to act on a base resin such as polyester polyol, polyether polyol, acrylic polyol, or carbonate polyol, and an epoxy resin obtained by allowing an amine compound or the like to act on a base resin having an epoxy resin. From the viewpoint of heat resistance, the adhesive agent preferably contains an epoxy resin.

The thickness of the adhesive agent layer is not particularly limited, but may be, for example, 1 to 10 µm or 2 to 7 µm from the viewpoint of adhesive strength, followability, and the like.

As the pressure-sensitive adhesive agent, one that can be bonded to the packaging material can be used. Examples of the pressure-sensitive adhesive agent include an acrylic-based pressure-sensitive adhesive agent and a silicone-based pressure-sensitive adhesive agent. From the viewpoint of heat resistance, the pressure-sensitive adhesive agent is preferably a silicone-based pressure-sensitive adhesive agent.

The thickness of the pressure-sensitive adhesive agent layer is not particularly limited, but may be, for example, 1 to 10 µm or 2 to 7 µm from the viewpoint of adhesive strength, followability, and the like.

The sealant layer is a layer that imparts sealing properties by heat seal to the protective film 20. Examples of the material constituting the sealant layer include thermoplastic resins such as a polyolefin-based resin, a polyamide-based resin, a polyester-based resin, a polycarbonate-based resin, a polyphenylene ether-based resin, a polyacetal-based resin, a polystyrene-based resin, a polyvinyl chloride-based resin, and a polyvinyl acetate-based resin.

From the viewpoint of heat resistance and sealability, the main component (hereinafter, also referred to as the "base resin") of the sealant layer is preferably one selected from the group consisting of a polyolefin-based resin, a polyamide-based resin, and a polyester-based resin. The above-listed various resins may be used individually or in combination of two or more. The above-listed various resins can be blended and polymer-alloyed to control sealability and heat resistance.

Examples of the polyolefin-based resin include: low-, medium-, or high-density polyethylene; an ethylene-α-olefin copolymer; polypropylene; a block or random copolymer containing propylene as a copolymerization component; and a propylene-α-olefin copolymer. When the polyolefin-based resin is a copolymer, it may be a block copolymer or may be a random copolymer.

Examples of the polyester-based resin include a polyethylene terephthalate (PET) resin, a polybutylene terephthalate (PBT) resin, a polyethylene naphthalate (PEN) resin, a polybutylene naphthalate (PBN) resin, and a copolymer thereof. The polyester-based resin may be obtained by copolymerizing an optional acid and glycol.

The sealant layer may contain a polyolefin-based elastomer. The polyolefin-based elastomer may or may not have compatibility with the above-described base resins or may contain both a compatible polyolefin-based elastomer having compatibility and an incompatible polyolefin-based elastomer having no compatibility. The expression "having compatibility (compatible)" refers to dispersing in the base resin with a dispersion phase size of not less than 1 nm and less than 500 nm. The expression "having no compatibility (incompatible)" refers to dispersing in the base resin with a dispersion phase size of not less than 500 nm and less than 20 µm.

When the base resin is a polypropylene-based resin, an example of the compatible polyolefin-based elastomer is a propylene-butene-1 random copolymer, and an example of the incompatible polyolefin-based elastomer is an ethylene-butene-1 random copolymer. The polyolefin-based elastomers can be used individually or in combination of two or more.

Further, the sealant layer may contain, for example, an antioxidant, a slip agent, a flame retardant, an antiblocking agent, a photostabilizer, a dehydrator, a tackifier, a crystal nucleating agent, and a plasticizer as additives in order to impart sealability, heat resistance, and other functionalities. The contents of these additives are preferably not more than 5 parts by mass when the total mass of the sealant layer is 100 parts by mass.

The peak melting temperature of the sealant layer varies depending on its application, but may be, for example, 160 to 280°C from the viewpoint of heat resistance. The thickness of the sealant layer is not particularly limited, but may be, for example, 10 to 200 µm or 20 to 150 µm from the viewpoint of film thinning and heat seal strength. When the sealant layer is a plurality of layers, the total thickness of the plurality of the sealant layers may be in the above-described range, or the thickness of each of the plurality of the sealant layers may be in the above-described range.

At least one of the substrate film 1 and the adhesive layer 3 contains a hydrogen sulfide adsorbent.

The content of the hydrogen sulfide adsorbent in the substrate film 1 may be 0.5 mass% or more, 1 mass% or more, 2 mass% or more, 3 mass% or more, or 4 mass% or more with respect to the total mass of the substrate film 1, from the viewpoint of easily obtaining excellent hydrogen sulfide absorbability. The content of the hydrogen sulfide adsorbent may be 50 mass% or less, 40 mass% or less, 30 mass% or less, 20 mass% or less, 10 mass% or less, or 0 mass% with respect to the total mass of the substrate film 1. The content of the hydrogen sulfide adsorbent may be 0 to 50 mass%, 0.5 to 50 mass%, 1 to 40 mass%, 2 to 30 mass%, 3 to 20 mass%, or 4 to 10 mass% with respect to the total mass of the substrate film 1.

The content of the hydrogen sulfide adsorbent in the adhesive layer 3 may be 0.5 mass% or more, 1 mass% or more, 2 mass% or more, 3 mass% or more, or 4 mass% or more with respect to the total mass of the adhesive layer 3, from the viewpoint of easily obtaining excellent hydrogen sulfide absorbability. From the viewpoint of adhesiveness, the content of the hydrogen sulfide adsorbent may be 50 mass% or less, 40 mass% or less, 30 mass% or less, 20 mass% or less, 10 mass% or less, or 0 mass% with respect to the total mass of the adhesive layer 3. The content of the hydrogen sulfide adsorbent may be 0 to 50 mass%, 0.5 to 50 mass%, 1 to 40 mass%, 2 to 30 mass%, 3 to 20 mass%, or 4 to 10 mass% with respect to the total mass of the adhesive layer 3.

The protective film 20 shown in Fig. 3 has a multilayer configuration containing a substrate film 1 and an adhesive layer 3, and the above-described hydrogen sulfide adsorbent is contained in at least one of the substrate film 1 and the adhesive layer 3. It is considered that such a protective film can effectively suppress release of hydrogen sulfide into an external environment.

The protective film 20 shown in Fig. 3 can be produced by, for example, a method including a step of forming a gas barrier layer 1a on one surface of a substrate film 1 and a step of forming an adhesive layer 3 on the gas barrier layer 1a.

The gas barrier layer 1a can be formed by, for example, attaching a constituent material of the gas barrier layer 1a on one surface of the substrate film 1. When the gas barrier layer 1a is a metal vapor deposition layer, for example, metal only has to be deposited on one surface of the substrate film 1.

The adhesive layer 3 can be formed, for example, by coating the gas barrier layer 1a with a composition containing an adhesive agent or a pressure-sensitive adhesive agent, or by forming a film of a composition containing constituent components of a sealant layer by an extruder such as a T-die extruder and thereafter bonding the formed film to the gas barrier layer 1a by an adhesive agent or thermal bonding.

While examples of the protective film and the production method thereof have been described above, the present invention is not limited to these specific embodiments, and various alterations and modifications can be made within the scope of the present invention as defined in the appended claims.

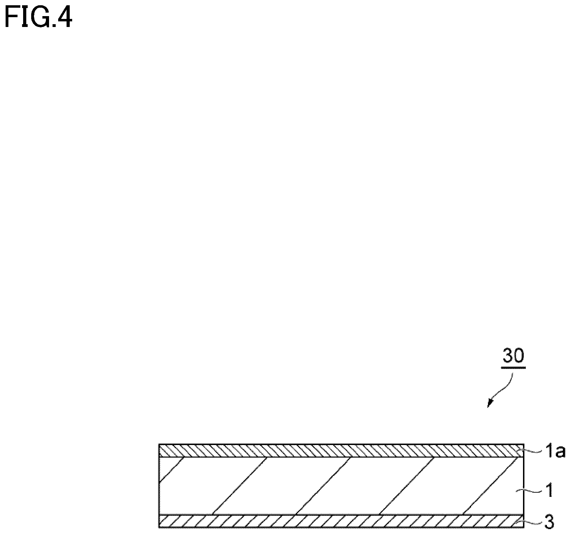

For example, the positional relationship between the substrate film 1 and the gas barrier layer 1a may be reversed. That is, the protective film may include, as a protective film 30 shown in Fig. 4, the gas barrier layer 1a, the substrate film 1, and the adhesive layer 3 in this order. The gas barrier layer 1a may be disposed on both surfaces of the substrate film 1.

The protective film 30 shown in Fig. 4 can be produced by, for example, a method including a step of forming a gas barrier layer 1a on one surface of a substrate film 1 and a step of forming an adhesive layer 3 on a surface opposite the gas barrier layer 1a of the substrate film 1. The gas barrier layer 1a can be formed, for example, in the same manner as above. The adhesive layer 3 can be formed, for example, by coating a surface opposite the gas barrier layer 1a of the substrate film 1 with a composition containing an adhesive agent or a pressure-sensitive adhesive agent, or by forming a film of a composition containing constituent components of a sealant layer by an extruder such as a T-die extruder and thereafter bonding the formed film to a surface opposite the gas barrier layer 1a of the substrate film 1 by an adhesive agent or thermal bonding.

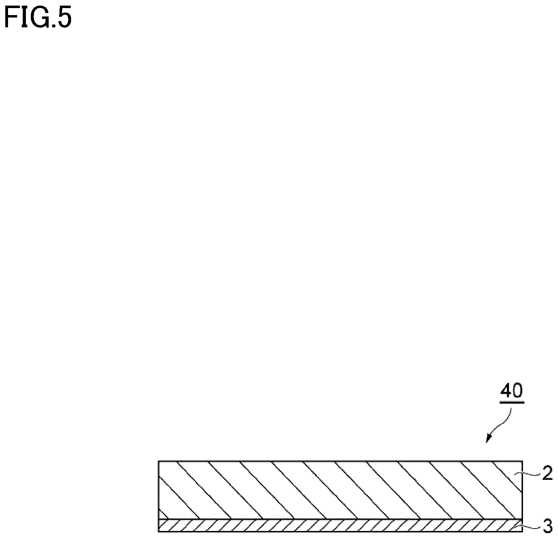

The protective film may have a multilayer configuration containing a metal foil and an adhesive layer, and a hydrogen sulfide adsorbent may be contained in the adhesive layer. An example of such a protective film is shown in Fig. 5.

A protective film 40 shown in Fig. 5 has a structure in which a metal foil 2 and an adhesive layer 3 are laminated.

The metal foil 2 has water vapor barrier properties to prevent moisture from entering the inside of the solid-state battery. Examples of the constituent metal of the metal foil 2 include aluminum, stainless steel, and copper. The metal foil 2 may contain, for example, at least one metal selected from the group consisting of aluminum, stainless steel, and copper. From the viewpoint of moisture resistance, processability, and cost, the metal foil 2 is preferably an aluminum foil.

The aluminum foil to be used may be preferably a soft aluminum foil particularly subjected to an annealing treatment, from the viewpoint of imparting desired ductility during molding, but may also be an iron-containing aluminum foil for a purpose of imparting further pinhole resistance and ductility during molding. The iron content in the aluminum foil, relative to 100 mass% of the aluminum foil, is preferably 0.1 to 9.0 mass% and more preferably 0.5 to 2.0 mass%. When the iron content is 0.1 mass% or more, the protective film 40 having excellent pinhole resistance and ductility can be obtained. When the iron content is 9.0 mass% or less, the protective film 40 having more excellent flexibility can be obtained. The aluminum foil to be used may be an untreated aluminum foil, but is preferably an aluminum foil subjected to a degreasing treatment in view of imparting corrosion resistance. When a degreasing treatment is performed to the aluminum foil, the degreasing treatment may be performed to only one surface or to both surfaces of the aluminum foil.

The thickness of the metal foil 2 is preferably 1 to 100 µm, more preferably 5 to 80 µm, and further preferably 10 to 60 µm.

The adhesive layer 3 can be, for example, the above-described adhesive agent layer, pressure-sensitive adhesive agent layer, or sealant layer. From the viewpoint of adhesion with the aluminum foil, and the like, the sealant layer may contain acid-modified polypropylene.

In the protective film 40, the adhesive layer 3 contains a hydrogen sulfide adsorbent. From the viewpoint of easily obtaining excellent hydrogen sulfide absorbability, the content of the hydrogen sulfide adsorbent may be 0.1 mass% or more, 0.3 mass% or more, 0.5 mass% or more, 1 mass% or more, or 2 mass% or more with respect to the total mass of the adhesive layer 3. From the viewpoint of adhesiveness, the content of the hydrogen sulfide adsorbent may be 50 mass% or less, 40 mass% or less, 30 mass% or less, 20 mass% or less, or 10 mass% or less with respect to the total mass of the adhesive layer 3. The content of the hydrogen sulfide adsorbent may be 0.1 to 50 mass%, 0.3 to 40 mass%, 0.5 to 30 mass%, 1 to 20 mass%, or 2 to 10 mass% with respect to the total mass of the adhesive layer 3.

The protective film 40 shown in Fig. 5 can be produced, for example, by a method including a step of forming an adhesive layer 3 on one surface of a metal foil 2. The adhesive layer 3 can be formed, for example, by coating the metal foil 2 with a composition containing an adhesive agent or a pressure-sensitive adhesive agent, or by forming a film of a composition containing constituent components of a sealant layer by an extruder such as a T-die extruder and thereafter bonding the formed film to the metal foil 2 by an adhesive agent or thermal bonding.

The present disclosure relates to the following matters.
[1] A protective film for solid-state batteries, which is a protective film arranged to cover a heat seal part of a solid-state battery including a battery element having a solid electrolyte, a packaging material housing the battery element, and the heat seal part disposed to an outer edge of the packaging material, and which contains a hydrogen sulfide adsorbent.
[2] The protective film for solid-state batteries according to [1] having a multilayer configuration containing a substrate film and an adhesive layer, in which the hydrogen sulfide adsorbent is contained in at least one of the substrate film and the adhesive layer.
[3] The protective film for solid-state batteries according to [2], further including a gas barrier layer disposed on at least one surface of the substrate film.
[4] The protective film for solid-state batteries according to [1] having a multilayer configuration containing a metal foil and an adhesive layer, in which the hydrogen sulfide adsorbent is contained in the adhesive layer.
[5] The protective film for solid-state batteries according to any of [1] to [4], in which the hydrogen sulfide adsorbent contains zinc oxide.
[6] The protective film for solid-state batteries according to any of [1] to [4], in which the hydrogen sulfide adsorbent is zeolite containing zinc ions.
[7] The protective film for solid-state batteries according to any of [1] to [4], in which the hydrogen sulfide adsorbent is a mixture containing zeolite, zinc oxide, and copper oxide.
[8] The protective film for solid-state batteries according to any of [1] to [4], in which the hydrogen sulfide adsorbent contains at least one of silver sulfate and silver acetate.
[9] The protective film for solid-state batteries according to [3], in which the gas barrier layer contains at least one of alumina and silica.
[10] The protective film for solid-state batteries according to any of [1] to [9], having a water vapor permeability of 10 g/m²·day or less.

### EXAMPLES

In the following, the present invention will be more specifically described based on Examples. However, the present invention should not be limited to the following Examples.

### [Materials used]

Materials used in Examples and Comparative Examples are illustrated below.

### <Resin for forming substrate film>

Polyethylene terephthalate (PET)

### <Metal foil (thickness: 50 µm)>

An annealed and degreased soft aluminum foil ("8079 Material" manufactured by Toyo Aluminum K.K.) was used.

### <Composition for forming adhesive layer (adhesive agent layer, pressure-sensitive adhesive agent layer, or sealant layer)>

### (Adhesive agent)

Araldite (registered trademark) (manufactured by HUNTSMAN Advanced Materials, two pack epoxy-based adhesive agent) was used.

### (Pressure-sensitive adhesive agent)

An acrylic-based PSA tape was used.

### (Composition for forming sealant layer)

TSA16 manufactured by Toray Industries, Inc. was used.

### <Hydrogen sulfide adsorbent>

· Material A: manufactured by Sinanen Zeomic Co., Ltd., trade name: Dushlite ZH (zeolite containing zinc ions)
· Material B: manufactured by Dainichiseika Color & Chemicals Mfg. Co., Ltd., trade name: "Daimushu PE-M 3000-Z" (material including three components of ZnO, CaO, and aluminum potassium sulfate)

### [Preparation of protective film]

### (Example 1)

As a substrate film, a polyethylene terephthalate (PET) film (thickness: 12 µm) containing 5.0 mass% of a hydrogen sulfide adsorbent of Material A was prepared. Alumina was deposited on one surface of the obtained film to prepare a gas barrier film including a metal vapor deposition layer and a substrate film.

### (Example 2)

As a substrate film, a polyethylene terephthalate (PET) film (thickness: 12 µm) containing 5.0 mass% of a hydrogen sulfide adsorbent of Material A was prepared. Alumina was deposited on one surface of the obtained film to prepare a gas barrier film including a metal vapor deposition layer and a substrate film. Subsequently, a sealant layer was formed on a surface at the metal vapor deposition layer side of the gas barrier film to prepare a protective film including a substrate film, a metal vapor deposition layer, and a sealant layer in this order.

### (Example 3)

As a substrate film, a polyethylene terephthalate (PET) film (thickness: 12 µm) containing 5.0 mass% of a hydrogen sulfide adsorbent of Material A was prepared. Alumina was deposited on one surface of the obtained film to prepare a gas barrier film including a metal vapor deposition layer and a substrate film. Subsequently, an adhesive agent was applied on a surface at the metal vapor deposition layer side of the gas barrier film to form an adhesive agent layer, so that a protective film including a substrate film, a metal vapor deposition layer, and an adhesive agent layer in this order was prepared.

### (Example 4)

As a substrate film, a polyethylene terephthalate (PET) film (thickness: 12 µm) containing 5.0 mass% of a hydrogen sulfide adsorbent of Material A was prepared. Alumina was deposited on one surface of the obtained film to prepare a gas barrier film including a metal vapor deposition layer and a substrate film. Subsequently, a pressure-sensitive adhesive agent was applied on a surface at the metal vapor deposition layer side of the gas barrier film to form a pressure-sensitive adhesive agent layer, so that a protective film including a substrate film, a metal vapor deposition layer, and a pressure-sensitive adhesive agent layer in this order was prepared.

### (Example 5)

As a substrate film, a polyethylene terephthalate (PET) film (thickness: 12 µm) was prepared. Alumina was deposited on one surface of the obtained film to prepare a gas barrier film including a metal vapor deposition layer and a substrate film. Subsequently, a sealant layer containing 5.0 mass% of a hydrogen sulfide adsorbent of Material A was formed on a surface at the metal vapor deposition layer side of the gas barrier film to prepare a protective film including a substrate film, a metal vapor deposition layer, and a sealant layer in this order.

### (Example 6)

As a substrate film, a polyethylene terephthalate (PET) film (thickness: 12 µm) was prepared. Alumina was deposited on one surface of the obtained film to prepare a gas barrier film including a metal vapor deposition layer and a substrate film. Subsequently, a sealant layer containing 2.5 mass% of a hydrogen sulfide adsorbent of Material A was formed on a surface at the metal vapor deposition layer side of the gas barrier film to prepare a protective film including a substrate film, a metal vapor deposition layer, and a sealant layer in this order.

### (Example 7)

As a substrate film, a polyethylene terephthalate (PET) film (thickness: 12 µm) was prepared. Alumina was deposited on one surface of the obtained film to prepare a gas barrier film including a metal vapor deposition layer and a substrate film. Subsequently, a sealant layer containing 30.0 mass% of a hydrogen sulfide adsorbent of Material A was formed on a surface at the metal vapor deposition layer side of the gas barrier film to prepare a protective film including a substrate film, a metal vapor deposition layer, and a sealant layer in this order.

### (Example 8)

As a substrate film, a polyethylene terephthalate (PET) film (thickness: 12 µm) was prepared. Alumina was deposited on one surface of the obtained film to prepare a gas barrier film including a metal vapor deposition layer and a substrate film. Subsequently, a sealant layer containing 5.0 mass% of a hydrogen sulfide adsorbent of Material A was formed on a surface at the metal vapor deposition layer side of the gas barrier film to prepare a protective film including a substrate film, a metal vapor deposition layer, and a sealant layer in this order.

### (Example 9)

As a substrate film, a polyethylene terephthalate (PET) film (thickness: 12 µm) was prepared. Alumina was deposited on one surface of the obtained film to prepare a gas barrier film including a metal vapor deposition layer and a substrate film. Subsequently, an adhesive agent layer containing 5.0 mass% of a hydrogen sulfide adsorbent of Material A was formed on a surface at the metal vapor deposition layer side of the gas barrier film to prepare a protective film including a substrate film, a metal vapor deposition layer, and an adhesive agent layer in this order.

### (Example 10)

As a substrate film, a polyethylene terephthalate (PET) film (thickness: 12 µm) was prepared. Alumina was deposited on one surface of the obtained film to prepare a gas barrier film including a metal vapor deposition layer and a substrate film. Subsequently, a pressure-sensitive adhesive agent layer containing 5.0 mass% of a hydrogen sulfide adsorbent of Material A was formed on a surface at the metal vapor deposition layer side of the gas barrier film to prepare a protective film including a substrate film, a metal vapor deposition layer, and a pressure-sensitive adhesive agent layer in this order.

### (Example 11)

As a substrate film, a polyethylene terephthalate (PET) film (thickness: 12 µm) containing 5.0 mass% of a hydrogen sulfide adsorbent of Material A was prepared. Alumina was deposited on one surface of the obtained film to prepare a gas barrier film including a metal vapor deposition layer and a substrate film. Subsequently, a sealant layer containing 5.0 mass% of a hydrogen sulfide adsorbent of Material A was formed on a surface at the metal vapor deposition layer side of the gas barrier film to prepare a protective film including a substrate film, a metal vapor deposition layer, and a sealant layer in this order.

### (Example 12)

As a substrate film, a polyethylene terephthalate (PET) film (thickness: 12 µm) containing 5.0 mass% of a hydrogen sulfide adsorbent of Material A was prepared. Alumina was deposited on one surface of the obtained film to prepare a gas barrier film including a metal vapor deposition layer and a substrate film. Subsequently, an adhesive agent layer containing 5.0 mass% of a hydrogen sulfide adsorbent of Material A was formed on a surface at the metal vapor deposition layer side of the gas barrier film to prepare a protective film including a substrate film, a metal vapor deposition layer, and an adhesive agent layer in this order.

### (Example 13)

As a substrate film, a polyethylene terephthalate (PET) film (thickness: 12 µm) containing 5.0 mass% of a hydrogen sulfide adsorbent of Material A was prepared. Alumina was deposited on one surface of the obtained film to prepare a gas barrier film including a metal vapor deposition layer and a substrate film. Subsequently, a pressure-sensitive adhesive agent layer containing 5.0 mass% of a hydrogen sulfide adsorbent of Material A was formed on a surface at the metal vapor deposition layer side of the gas barrier film to prepare a protective film including a substrate film, a metal vapor deposition layer, and a pressure-sensitive adhesive agent layer in this order.

### (Example 14)

A polyethylene terephthalate (PET) film (thickness: 12 µm) containing 5.0 mass% of a hydrogen sulfide adsorbent of Material A was prepared.

### (Example 15)

As a substrate film, a polyethylene terephthalate (PET) film (thickness: 12 µm) containing 5.0 mass% of a hydrogen sulfide adsorbent of Material A was prepared. A sealant layer was formed on one surface of the obtained film to prepare a protective film (substrate film/sealant layer).

### (Example 16)

As a substrate film, a polyethylene terephthalate (PET) film (thickness: 12 µm) containing 5.0 mass% of a hydrogen sulfide adsorbent of Material A was prepared. An adhesive agent layer was formed on one surface of the obtained film to prepare a protective film (substrate film/adhesive agent layer).

### (Example 17)

As a substrate film, a polyethylene terephthalate (PET) film (thickness: 12 µm) containing 5.0 mass% of a hydrogen sulfide adsorbent of Material A was prepared. A pressure-sensitive adhesive agent layer was formed on one surface of the obtained film to prepare a protective film (substrate film/pressure-sensitive adhesive agent layer).

### (Example 18)

As a substrate film, a polyethylene terephthalate (PET) film (thickness: 12 µm) was prepared. A sealant layer containing 5.0 mass% of a hydrogen sulfide adsorbent of Material A was formed on one surface of the obtained film to prepare a protective film (substrate film/sealant layer).

### (Example 19)

As a substrate film, a polyethylene terephthalate (PET) film (thickness: 12 µm) was prepared. An adhesive agent layer containing 5.0 mass% of a hydrogen sulfide adsorbent of Material A was formed on one surface of the obtained film to prepare a protective film (substrate film/adhesive agent layer).

### (Example 20)

As a substrate film, a polyethylene terephthalate (PET) film (thickness: 12 µm) was prepared. A pressure-sensitive adhesive agent layer containing 5.0 mass% of a hydrogen sulfide adsorbent of Material A was formed on one surface of the obtained film to prepare a protective film (substrate film/pressure-sensitive adhesive agent layer).

### (Example 21)

As a substrate film, a polyethylene terephthalate (PET) film (thickness: 12 µm) containing 3.0 mass% of a hydrogen sulfide adsorbent of Material A was prepared. A sealant layer containing 5.0 mass% of a hydrogen sulfide adsorbent of Material A was formed on one surface of the obtained film to prepare a protective film (substrate film/sealant layer).

### (Example 22)

As a substrate film, a polyethylene terephthalate (PET) film (thickness: 12 µm) containing 3.0 mass% of a hydrogen sulfide adsorbent of Material A was prepared. An adhesive agent layer containing 5.0 mass% of a hydrogen sulfide adsorbent of Material A was formed on one surface of the obtained film to prepare a protective film (substrate film/adhesive agent layer).

### (Example 23)

As a substrate film, a polyethylene terephthalate (PET) film (thickness: 12 µm) containing 3.0 mass% of a hydrogen sulfide adsorbent of Material A was prepared. A pressure-sensitive adhesive agent layer containing 5.0 mass% of a hydrogen sulfide adsorbent of Material A was formed on one surface of the obtained film to prepare a protective film (substrate film/pressure-sensitive adhesive agent layer).

### (Comparative Example 1)

As a substrate film, a polyethylene terephthalate (PET) film (thickness: 12 µm) was prepared. A sealant layer was formed on one surface of the obtained film to prepare a protective film (substrate film/sealant layer).

### (Comparative Example 2)

As a substrate film, a polyethylene terephthalate (PET) film (thickness: 4.5 µm) was prepared. A sealant layer was formed on one surface of the obtained film to prepare a protective film (substrate film/sealant layer).

### (Comparative Example 3)

As a substrate film, a polyethylene terephthalate (PET) film (thickness: 50 µm) was prepared. A sealant layer was formed on one surface of the obtained film to prepare a protective film (substrate film/sealant layer).

### (Comparative Example 4)

As a substrate film, a polyethylene terephthalate (PET) film (thickness: 100 µm) was prepared. A sealant layer was formed on one surface of the obtained film to prepare a protective film (substrate film/sealant layer).

### (Comparative Example 5)

As a substrate film, a polyethylene terephthalate (PET) film (thickness: 12 µm) was prepared. An adhesive agent layer was formed on one surface of the obtained film to prepare a protective film (substrate film/adhesive agent layer).

### (Comparative Example 6)

As a substrate film, a polyethylene terephthalate (PET) film (thickness: 12 µm) was prepared. A pressure-sensitive adhesive agent layer was formed on one surface of the obtained film to prepare a protective film (substrate film/pressure-sensitive adhesive agent layer).

### (Example 24)

A sealant layer containing 3.0 mass% of a hydrogen sulfide adsorbent of Material A was formed on one surface of an aluminum foil (AL foil) to prepare a protective film (AL layer/sealant layer).

### (Example 25)

An adhesive agent layer containing 3.0 mass% of a hydrogen sulfide adsorbent of Material A was formed on one surface of an aluminum foil (AL foil) to prepare a protective film (AL layer/adhesive agent layer).

### (Example 26)

A pressure-sensitive adhesive agent layer containing 3.0 mass% of a hydrogen sulfide adsorbent of Material A was formed on one surface of an aluminum foil (AL foil) to prepare a protective film (AL layer/pressure-sensitive adhesive agent layer).

### (Comparative Example 7)

A pressure-sensitive adhesive agent layer was formed on one surface of an aluminum foil (AL foil) to prepare a protective film (AL layer/pressure-sensitive adhesive agent layer).

### (Comparative Example 8)

An adhesive agent layer was formed on one surface of an aluminum foil (AL foil) to prepare a protective film (AL layer/adhesive agent layer).

### (Comparative Example 9)

A pressure-sensitive adhesive agent layer was formed on one surface of an aluminum foil (AL foil) to prepare a protective film (AL layer/pressure-sensitive adhesive agent layer).

### [Measurement of water vapor permeability]

For the gas barrier films of Examples 1 to 17, the substrate films of Examples 14 to 23 and Comparative Examples 1 to 6, as well as the aluminum foils of Examples 24 to 26 and Comparative Examples 7 to 9, water vapor permeability at 40°C and 90% RH was measured in accordance with "JIS Z 0208:1976 Cup method".

### [Evaluation of protective film]

### (Evaluation of hydrogen sulfide (H₂S) absorbability)

The protective film was cut to a size of 50 mm x 50 mm to obtain a sample for evaluating hydrogen sulfide absorbability. This sample was placed in a 2 L Tedlar bag, and the Tedlar bag was sealed. Into this Tedlar bag, 2 L of hydrogen sulfide gas having a concentration of 20 ppm by mass was introduced, and left to stand at room temperature (25°C) for 144 hours. The hydrogen sulfide concentration in the Tedlar bag after being left to stand for 144 hours was measured. From the obtained result, hydrogen sulfide absorbability was evaluated based on the following evaluation criteria.
A: The hydrogen sulfide concentration is 5 ppm by mass or less.
B: The hydrogen sulfide concentration is more than 5 ppm by mass.

### (Peel strength (N/5mm))

The protective film was cut to 5 mm in width to obtain a measurement sample. On the other hand, a packaging material for solid-state batteries laminated with a PET film as a support body was prepared. The obtained measurement sample was placed on the support body with the adhesive layer being in contact with the support body, and thereafter the measurement sample and the support body were bonded. Subsequently, peel strength (180° peeling, peel rate: 300 mm/min) between the gas barrier film or the substrate film and the adhesive layer was measured. Note that when the adhesive layer was a pressure-sensitive adhesive agent layer, the measurement sample was placed on the support body, and thereafter a 2 kg roller was reciprocated 5 times to bond the measurement sample and the support body. When the adhesive layer was an adhesive agent layer, the measurement sample was placed on the support body, a 2 kg roller was reciprocated 5 times, and thereafter the adhesive agent layer was cured. When the adhesive layer was a sealant layer, heat sealing was performed in a state in which the measurement sample was placed on the support body, under conditions of temperature: 150°C, pressure: 0.98 MPs, and time: 150 sec.

The summary of the configurations and evaluation results of Examples and Comparative Examples is shown in Tables 1 to 3.

**[Table 1]**

| | Configuration | | | | | | | | | Evaluation | |
|---|---|---|---|---|---|---|---|---|---|---|---|
| | Gas barrier film | | | | | | Adhesive layer | | | Peel strength (N/5 mm) | Hydrogen sulfide absorptivity |
| | Metal vapor deposition layer | Substrate film | | | | Gas barrier properties (g/m²·day) | | | | | |
| | | Material | Thickness (µm) | Hydrogen sulfide adsorbent | | | Type | Hydrogen sulfide adsorbent | | | |
| | | | | Type | Blending amount (mass%) | | | Type | Blending amount (mass%) | | |
| Example 1 | Present | PET | 12 | A | 5.0 | <10 | - | - | - | - | A |
| Example 2 | Present | PET | 12 | A | 5.0 | <10 | Sealant Layer | - | - | 3.65 | A |
| Example 3 | Present | PET | 12 | A | 5.0 | <10 | Adhesive agent layer | - | - | 2.9 | A |
| Example 4 | Present | PET | 12 | A | 5.0 | <10 | Pressure-sensitive adhesive agent layer | - | - | 6.4 | A |
| Example 5 | Present | PET | 12 | - | - | <10 | Sealant layer | A | 5.0 | 3.7 | A |
| Example 6 | Present | PET | 12 | - | - | <10 | Sealant layer | A | 2.5 | 3.61 | A |
| Example | Present | PET | 12 | - | - | <10 | Sealant layer | A | 30.0 | 3.84 | A |

| | | | | | | | | | | | |
|---|---|---|---|---|---|---|---|---|---|---|---|
| 7 | | | | | | | | | | | |
| Example 8 | Present | PET | 12 | - | - | <10 | Sealant layer | B | 5.0 | 3.58 | A |
| Example 9 | Present | PET | 12 | - | - | <10 | Adhesive agent layer | A | 5.0 | 2.84 | A |
| Example 10 | Present | PET | 12 | - | - | <10 | Pressure-sensitive adhesive agent layer | A | 5.0 | 6.32 | A |
| Example 11 | Present | PET | 12 | A | 5.0 | <10 | Sealant layer | A | 5.0 | 3.6 | A |
| Example 12 | Present | PET | 12 | A | 5.0 | <10 | Adhesive agent layer | A | 5.0 | 2.91 | A |
| Example 13 | Present | PET | 12 | A | 5.0 | <10 | Pressure-sensitive adhesive agent layer | A | 5.0 | 6.34 | A |

**[Table 2]**

| | Configuration | | | | | | | | | Evaluation | |
|---|---|---|---|---|---|---|---|---|---|---|---|
| | Gas barrier film | | | | | | Adhesive layer | | | Peel strength (N/5 mm) | Hydrogen sulfide absorptivity |
| | Metal vapor deposition layer | Substrate film | | | | Gas barrier properties (g/m²·day) | | | | | |
| | | Material | Thickness (µm) | Hydrogen sulfide adsorbent | | | Type | Hydrogen sulfide adsorbent | | | |
| | | | | Type | Blending amount (mass%) | | | Type | Blending amount (mass%) | | |
| Example 14 | - | PET | 12 | A | 5.0 | 231 | - | - | - | - | A |
| Example 15 | - | PET | 12 | A | 5.0 | 231 | Sealant Layer | - | - | 3.62 | A |
| Example 16 | - | PET | 12 | A | 5.0 | 231 | Adhesive agent layer | - | - | 2.88 | A |
| Example 17 | - | PET | 12 | A | 5.0 | 231 | Pressure-sensitive adhesive agent layer | - | - | 6.43 | A |
| Example 18 | - | PET | 12 | - | - | 231 | Sealant layer | A | 5.0 | 3.6 | A |
| Example 19 | - | PET | 12 | - | - | 231 | Adhesive layer | A | 5.0 | 2.8 | A |
| Example 20 | - | PET | 12 | - | - | 231 | Pressure-sensitive adhesive agent layer | A | 5.0 | 6.4 | A |
| Example 21 | - | PET | 12 | A | 3.0 | 231 | Sealant layer | A | 5.0 | 3.57 | A |

| | | | | | | | | | | | |
|---|---|---|---|---|---|---|---|---|---|---|---|
| Example 22 | - | PET | 12 | A | 3.0 | 231 | Adhesive agent layer | A | 5.0 | 2.87 | A |
| Example 23 | - | PET | 12 | A | 3.0 | 231 | Pressure-sensitive adhesive agent layer | A | 5.0 | 6.39 | A |
| Comparative Example 1 | - | PET | 12 | - | - | 231 | Sealant layer | - | - | 3.61 | B |
| Comparative Example 2 | - | PET | 4.5 | - | - | 278 | Sealant layer | - | - | 3.58 | B |
| Comparative Example 3 | - | PET | 50 | - | - | 25 | Sealant layer | - | - | 3.6 | B |
| Comparative Example 4 | - | PET | 100 | - | - | 12.5 | Sealant layer | - | - | 3.65 | B |
| Comparative Example 5 | - | PET | 12 | - | - | 231 | Adhesive agent layer | - | - | 2.87 | B |
| Comparative Example 6 | - | PET | 12 | - | - | 231 | Pressure-sensitive adhesive agent layer | - | - | 6.44 | B |

**[Table 3]**

| | Configuration | | | | | | | | Evaluation | |
|---|---|---|---|---|---|---|---|---|---|---|
| | Metal foil | | | | | Adhesive layer | | | Peel strength (N/5 mm) | Hydrogen sulfide absorptivity |
| | Material | Thickness (µm) | Hydrogen sulfide adsorbent | | Gas barrier properties (g/m²·day) | Type | Hydrogen sulfide adsorbent | | | |
| | | | Type | Blending amount (mass%) | | | Type | Blending amount (mass%) | | |
| Example 24 | AL foil | 50 | - | - | <1 × 10⁻⁵ | Sealant layer | A | 3.0 | - | A |
| Example 25 | AL foil | 50 | - | - | <1 × 10⁻⁵ | Adhesive agent layer | A | 3.0 | - | A |
| Example 26 | AL foil | 50 | - | - | <1 × 10⁻⁵ | Pressure-sensitive adhesive agent layer | A | 3.0 | - | A |
| Comparative Example 7 | AL foil | 50 | - | - | <1 × 10⁻⁵ | Sealant layer | - | - | - | B |
| Comparative Example 8 | AL foil | 50 | - | - | <1 × 10⁻⁵ | Adhesive agent layer | - | - | - | B |
| Comparative Example 9 | AL foil | 50 | - | - | <1 × 10⁻⁵ | Pressure-sensitive adhesive agent layer | - | - | - | B |

It can be understood that the protective films of Examples are more excellent in hydrogen sulfide absorbability than the protective films of Comparative Examples. That is, according to the protective films of Examples, release of hydrogen sulfide into an external environment can be suppressed, as compared to the protective film of Comparative Examples.

### [Reference Signs List]

- 10: Packaging material
- 20, 30, 40: Protective film for solid-state batteries
- 1: Substrate film
- 1a: Gas barrier layer
- 2: Metal foil
- 3: Adhesive layer
- 50: Solid-state battery
- 52: Battery element
- 53: Metal terminal

## Claims

1. A protective film for solid-state batteries, which is a protective film arranged to cover a heat seal part of a solid-state battery including
a battery element having a solid electrolyte,
a packaging material housing the battery element,
the heat seal part being disposed to an outer edge of the packaging material and containing a hydrogen sulfide adsorbent.

2. The protective film for solid-state batteries according to claim 1, having a multilayer configuration containing a substrate film and an adhesive layer
wherein the hydrogen sulfide adsorbent is contained in at least one of the substrate film and the adhesive layer.

3. The protective film for solid-state batteries according to claim 2, further comprising a gas barrier layer disposed on at least one surface of the substrate film.

4. The protective film for solid-state batteries according to claim 1, having a multilayer configuration containing a metal foil and an adhesive layer,
wherein the hydrogen sulfide adsorbent is contained in the adhesive layer.

5. The protective film for solid-state batteries according to any one of claims 1 to 4, wherein the hydrogen sulfide adsorbent contains zinc oxide.

6. The protective film for solid-state batteries according to any one of claims 1 to 4, wherein the hydrogen sulfide adsorbent comprises zeolite containing zinc ions.

7. The protective film for solid-state batteries according to any one of claims 1 to 4, wherein the hydrogen sulfide adsorbent comprises a mixture containing zeolite, zinc oxide, and copper oxide.

8. The protective film for solid-state batteries according to any one of claims 1 to 4, wherein the hydrogen sulfide adsorbent comprises at least one of silver sulfate and silver acetate.

9. The protective film for solid-state batteries according to claim 3, wherein the gas barrier layer comprises at least one of alumina and silica.

10. The protective film for solid-state batteries according to any one of claims 1 to 9, having a water vapor permeability of 10 g/m²·day or less.
